(19) Europäisches Patentamt
European Patent Office
Office européen des brevets

(11) **EP 1 883 872 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(51) Int Cl.:
***G05B 19/418*** (2006.01)

(21) Anmeldenummer: **06706354.5**

(22) Anmeldetag: **23.01.2006**

(86) Internationale Anmeldenummer:
**PCT/EP2006/000549**

(87) Internationale Veröffentlichungsnummer:
**WO 2006/084565 (17.08.2006 Gazette 2006/33)**

(54) **VERFAHREN ZUR OPTIMIERUNG VON MESSZEITEN EINER MESSVORRICHTUNG**

METHOD FOR OPTIMISING MEASURING TIMES OF A MEASURING DEVICE

PROCEDE D'OPTIMISATION DE TEMPS DE MESURE D'UN DISPOSITIF DE MESURE

(84) Benannte Vertragsstaaten:
**DE FR GB**

(30) Priorität: **08.02.2005 DE 102005005835**

(43) Veröffentlichungstag der Anmeldung:
**06.02.2008 Patentblatt 2008/06**

(73) Patentinhaber: **Immobiliengesellschaft Helmut Fischer GmbH & Co. KG**
**71069 Sindelfingen (DE)**

(72) Erfinder: **RÖSSIGER, Volker**
**71069 Sindelfingen (DE)**

(74) Vertreter: **Maser, Jochen**
**Patentanwälte**
**Mammel & Maser**
**Tilsiter Strasse 3**
**71065 Sindelfingen (DE)**

(56) Entgegenhaltungen:
**US-A1- 2002 054 716     US-A1- 2002 173 935**
**US-A1- 2004 131 148**

- **DAVIS B J ET AL: "Sampling below the Nyquist rate in interferometric fluorescence microscopy with multi-wavelength measurements to remove aliasing" DIGITAL SIGNAL PROCESSING WORKSHOP, 2004 AND THE 3RD IEEE SIGNAL PROCESSING EDUCATION WORKSHOP. 2004 IEEE 11TH TAOS SKI VALLEY, NM, USA 1-4 AUG. 2004, PISCATAWAY, NJ, USA,IEEE, 1. August 2004 (2004-08-01), Seiten 329-333, XP010806755 ISBN: 0-7803-8434-2**

**Beschreibung**

Die Erfindung betrifft ein Verfahren zur Optimierung von Messzeiten einer Messvorrichtung für eine Prüfung von Serienteilen.

Die Durchführung von Qualitätskontrollen während der Herstellung von Gegenständen, vor der Weiterverarbeitung von Gegenständen oder vor der Auslieferung von Gegenständen ist von erheblicher Bedeutung für die Qualitätssicherung und Kundenzufriedenheit. In einigen Fällen ist eine solche Qualitätskontrolle auch für die Produktsicherheit notwendig. Für eine Vielzahl von Serienteilen ist darüber hinaus erforderlich, dass eine 100 %-Prüfung durchgeführt wird. Dies ist zumindest bei sicherheitsrelevanten Teilen der Fall. Solche Messungen und Überprüfungen benötigen einen erheblichen Zeitaufwand, da für jede durchgeführte Messung eine bestimmte Messzeit erforderlich ist, um eine hinreichende geringe Messunsicherheit zu erhalten. Neben der Wiederholpräzision (repeatability) ist für die Fähigkeit eines Gerätes, einen bestimmten Prozess zu kontrollieren, noch die Reproduzierbarkeit (reproducibility) seiner Messungen sowie seine Stabilität von Bedeutung. Letztere sind aber nicht durch die Messzeit zu beeinflussen. Da bei Röntgenfluoreszenz-Messgeräten oft die Wiederholpräzision die gesamte Messunsicherheit dominiert und damit oft auch die Gerätefähigkeit (gage R&R) bestimmt, muß diese entsprechend den Erfordernissen des konkreten Prozesses mit seinen Toleranzen angepaßt werden, denn eine längere Messzeit bedeutet eine höhere Wiederholpräzision.

Das Dokument US2002/0173935 offenbart ein Verfahren zur Qualitätskontrollen, bei dem der erfaßte Messwert an dem Messgegenstand mit einem oberen und unteren Warngrenzwert verglichen wird.

Der Erfindung liegt deshalb die Aufgabe zugrunde, ein Verfahren zur Optimierung von Messzeiten einer fähigen Messvorrichtung vorzuschlagen, die eine Verkürzung der Messzeiten unter Beibehaltung der Gerätefähigkeit (Messsicherheit) ermöglicht.

Diese Aufgabe wird erfindungsgemäß durch ein Verfahren gemäß den Merkmalen des Anspruchs 1 gelöst.

Die Erfassung eines Messwertes durch eine Messvorrichtung wird zunächst mit einer verkürzten Messzeit durchgeführt. Diese Messzeit ist gegenüber einer fähigen Messzeit verkürzt. Unter einer fähigen Messzeit wird eine Messzeit verstanden, die eine Messvorrichtung aufweist, bei der die zufällige Messunsicherheit $u_p$ klein genug ist, um die Prozessführung nicht zu beeinträchtigen bzw. diejenige Messzeit, mit der das Gerät die Kriterien der Gerätefähigkeit erfüllt, bei der also die Wiederholpräzision gut genug ist. Sofern innerhalb der verkürzten Messzeit ein Messwert erfasst wird, der innerhalb einer oberen und unteren Warngrenze liegt, wird dieser Messwert abgespeichert, und die nächste Messung wird durchgeführt. Die nächste Messung kann einen weiteren Messort desselben Gegenstandes oder einen nachfolgenden Gegenstand betreffen.

Sofern der mit der verkürzten Messzeit erfasste Messwert außerhalb eines oberen und unteren Warngrenzwertes liegt, wird eine erneute Messung mit der für die Gerätefähigkeit festgelegten Messzeit durchgeführt.

Durch eine längere Messzeit lässt sich die Messung präziser durchführen. Sofern der nunmehr erfasste Messwert innerhalb eines oberen und unteren maximal zulässigen Grenzwertes liegt, also innerhalb der Toleranz, wird.der Messwert für ein Gutteil abgespeichert. Sofern der erfasste Messwert außerhalb des oberen oder unteren maximal zulässigen Grenzwertes liegt, handelt es sich zweifelsfrei um ein Schlechtteil. Die nachfolgende Messung wird wieder mit der verkürzten Messzeit durchgeführt.

Durch dieses Verfahren zur Optimierung oder Reduzierung der Messzeit kann eine erhebliche Verringerung des Gesamtzeitaufwands für die Prüfung erzielt werden. Ein,solches Verfahren kann in einem vollautomatischen Prozess eingebunden sein, um eine Prüfung von Serienteilen zu ermöglichen.

Nach einer vorteilhaften Ausgestaltung des Verfahrens ist vorgesehen, dass der obere und untere Warngrenzwert innerhalb des zulässigen oberen und unteren Grenzwertes vorgesehen ist und mit einem Sicherheitsabstand beaufschlagt wird. Dieser Sicherheitsabstand entspricht etwa der doppelten Messunsicherheit für die fähige Messzeit.

Nach einer weiteren bevorzugten Ausführungsform werden die Warngrenzwerte auf einen unteren Grenzwert plus Sicherheitsabstand und einen oberen Grenzwert minus Sicherheitsabstand derart gesetzt, dass die zu prüfenden Teile beispielsweise mit einer Wahrscheinlichkeit von 95 % aller Fälle innerhalb der Warngrenzwerte liegen. Somit wird nur in 5 % aller Fälle ein Messwert mit der fähigen Messzeit geprüft, wohingegen 95 % aller Messwerte durch eine verkürzte Messzeit erfasst werden. Die Grenzen können in Abhängigkeit der zu prüfenden Gegenstände, der Sicherheitsanforderung an die Messung oder dergleichen angepasst werden.

Das Verfahren wird bevorzugt bei der Durchführung einer berührungslosen Messung an Messgegenständen eingesetzt. Eine berührungslose Messung kann durch elektromagnetische Strahlung erfolgen. Bevorzugt wird dieses erfindungsgemäße Verfahren zur Optimierung von Messzeiten bei einer Messung von Schichtdikken mit Röntgenfluoreszenz verwendet. Während der Messzeit werden einzelne Ereignisse gezählt'und erfasst. Diese Ereignisse bilden das Messsignal, aus dem der oder die Messwerte abgeleitet werden. Diese werden den Warngrenzwerten und/oder den Toleranzgrenzen gegenübergestellt, die innerhalb eines oberen und unteren maximal zulässigen Grenzwertes gegeben sind.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt, werden. Es zeigt

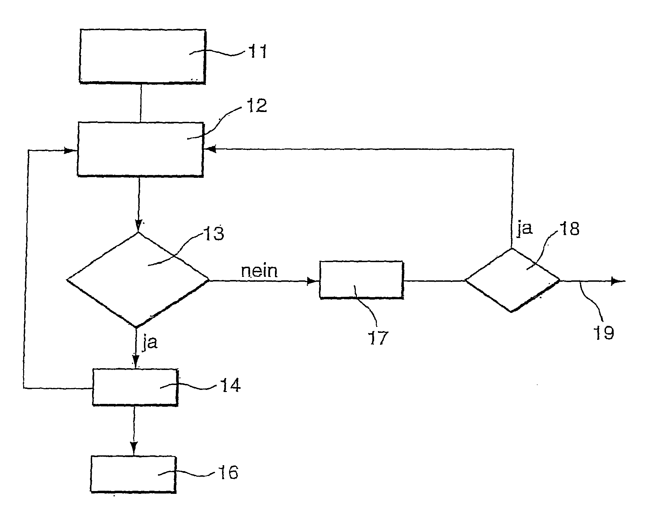

Figur 1    ein schematisch dargestelltes Flussdiagramm zur Durchführung des erfindungsgemäßen Verfahrens.

In Figur 1 ist schematisch ein Flussdiagramm zur Optimierung von Messzeiten einer nicht näher beschriebenen Messvorrichtung dargestellt. Für jede Messvorrichtung wird eine unverkürzte (fähige) Messzeit t festgelegt, welcher die Voraussetzung erfüllt, dass die Messvorrichtung fähig ist. Diese Voraussetzung sei dann erfüllt, wenn seine Präzision $u_p$ (zufällige Messunsicherheit) klein genug ist, um die Prozessführung nicht zu beeinträchtigen. Diese Präzision wird in den meisten Fällen von der Wiederholbarkeit $u_{rep}$ dominiert. Daraus ergibt sich die Forderung $u_p \sim u_{rep} < T/C$, wobei "C" ein Faktor ist, der je nach Festlegung der Gerätefähigkeit zwischen Werten von beispielsweise 24 bis 40 liegt. "T" stellt die Toleranz dar, die sich aus der Differenz zwischen einem oberen und unteren Grenzwert (OGW, UGW) ergibt. Die Wiederholpräzision ist abhängig von der Messzeit t, entsprechend $u_{rep} = a/\sqrt{t}$, wobei "a" eine Konstante ist. Somit ergibt sich die gerade fähige Messzeit

$$t \approx \left( \frac{a \cdot c}{T} \right)^2 .$$

Zur Durchführung der Messung werden gemäß dem Schritt 11 Warngrenzwerte gesetzt, die sich aus einem oberen Grenzwert (OGW) minus einem Sicherheitsabstand und einem unteren Grenzwert (UGW) plus einem Sicherheitsabstand ergeben. Der Sicherheitsabstand ist vorzugsweise 2 $u_p$ (Wiederholpräzision).

Abweichend von der fähigen Messzeit t wird eine verkürzte Messzeit t' zugrunde gelegt. Beispielsweise wird eine verkürzte Messzeit t' von einem Viertel bis einem Zehntel der fähigen Messzeit t gewählt. Unter den gewählten Voraussetzungen wird die Messwerterfassung gemäß Schritt 12 durchgeführt, wobei die Messung an einer Messstelle eines Gegenstandes mit einer verkürzten Messzeit t' durchgeführt wird.

In Schritt 13 wird der erfasste Messwert mit den Wärngrenzwerten verglichen. Sofern der umfasste Messwert innerhalb der Warngrenzwerte liegt, wird die nächste Messwerterfassung durchgeführt. Diese Routine wird gemäß Schritt 14 solange durchgeführt, bis alle Messstellen eines Messgegenstandes erfasst wurden oder die geforderte Anzahl der Messgegenstände mit einer oder mehreren Messstellen geprüft wurde. Anschließend wird das Messergebnis im Schritt 16 zusammenfassend abgespeichert, angezeigt und/oder ausgegeben.

Sofern innerhalb der verkürzten Messzeit t' ein Messwert erfasst wurde, der außerhalb der Warngrenzwerte liegt,'wird eine erneute Messung mit der fähigen Messzeit t gemäß Schritt 17 durchgeführt. Liegt der danach erfasste Messwert innerhalb des oberen und unteren maximal zulässigen Grenzwertes, wird der Messwert erfasst und der vorherige Messwert, der mit der verkürzten Messzeit t' erfasst wurde, überschrieben. Sofern der erfaßte Messwert mit der fähigen Messzeit t außerhalb der oberen und unteren Grenzwerte liegt, wird eine Meldung 19 für ein Schlechtteil ausgegeben, so dass dieses aussortiert oder kenntlich gemacht werden kann. Die nachfolgende Messung wird gemäß Schritt 18 auf die verkürzte Messzeit t' zurückgesetzt.

Für einen fähigen Prozess ist die Wahrscheinlichkeit einer Fehlmessung außerhalb der Warngrenzwerte sehr gering beziehungsweise geht gegen Null. Vorteilhafterweise kann dadurch wenigstens eine doppelt so große Wiederholstreuung zugelassen werden, was einer um den Faktor 4 verkürzten Messzeit entspricht, ohne die sichere Prozessführung zu beeinträchtigen.

Die Messvorrichtung ist beispielsweise zur berührungslosen Messung von Oberflächen, Oberflächenrauhigkeiten, Schichtdicken oder dergleichen vorgesehen.

Bei einer Prüfung von hochpräzisen Bauteilen, deren Abmessungen auch sehr gering sein können, kann bevorzugt eine Schichtdickenmessung durch Röntgenfluoreszenz erfolgen. Bei den vorgenannten Werten mit einem Faktor C von 36 ergibt sich eine fähige Messzeit von t = 100 sec. Bei einer reduzierten Messzeit t' von beispielsweise 25 s wären 95 % der erfassten Messwerte innerhalb der Warngrenzwerte, so dass bei nur 5 % aller Fälle ein Zeitbudget von 125 s erforderlich ist. Dadurch kann im Mittel der Messzeitaufwand von üblicherweise 100 s entsprechend der fähigen Messzeit im Mittel auf 30 s reduziert werden, wodurch die erzielte Einsparung und Erhöhung der Taktzeiten zur Prüfung der Teile offensichtlich ist.

**Patentansprüche**

1.    Verfahren zur Optimierung von Messzeiten einer Messvorrichtung zur Prüfung von Serienteilen **dadurch gekennzeichnet, dass**, eine Messung zur Erfassung eines Messwertes an einem Messgegenstand mit einer verkürzten Messzeit (t') durchgeführt ist, die kleiner als eine Messzeit (t) ist, die durch die Anforderung an eine Messgerätefähigkeit bestimmt ist,

    - bei dem der erfasste Messwert an dem Messgegenstand mit einem oberen und unteren Warngrenzwert verglichen wird,
    - bei dem ein innerhalb des oberen und unteren Warngrenzwertes liegender Messwert abgespeichert und eine nachfolgende Messwerterfassung mit einer verkürzten Messzeit (t') durchgeführt wird oder

- bei dem bei einem außerhalb des oberen und unteren Warngrenzwertes liegender Messwert eine erneute Messung an derselben Messstelle mit einer Messzeit (t) erfasst wird und

- bei dem eine nachfolgende Messwerterfassung mit einer verkürzten Messzeit (t') durchgeführt wird.

**2.** Verfahren nach Anspruch 1, **dadurch gekennzeichnet, dass** die Warngrenzwerte innerhalb der oberen und unteren zulässigen Grenzwerte vorgesehen sind und durch einen oberen Grenzwert minus einem Sicherheitsabstand und ein unterer Grenzwert plus einem Sicherheitsabstand bestimmt wird.

**3.** Verfahren nach einem der Ansprüche 1 oder 2, **dadurch gekennzeichnet, dass** eine berührungslose Messung der Messgegenstände, insbesondere mit einer Röntgenfluoreszenzstrahlung, durchgeführt wird.

## Claims

**1.** Method for optimizing measuring times of a measuring device for testing series-produced parts, **characterized in that** a measurement is carried out in order to acquire a measured value on a measurement object with a shortened measuring time (t') which is smaller than a measuring time (t) which is determined by the requirement placed on a measuring instrument capability,

- in which the acquired measured value on the measurement object is compared with an upper and lower warning limit value,

- in which a measured value lying between the upper and lower warning limit values is stored, and a subsequent measured value acquisition is carried out with a shortened measuring time (t'), or

- in which a renewed measurement at the same measuring site is acquired with a measuring time (t) given a measured value lying outside the upper and lower warning limit values, and

- in which a subsequent measured value acquisition is carried out with a shortened measuring time (t').

**2.** Method according to Claim 1, **characterized in that** the warning limit values are provided between the upper and lower permissible limit values and are determined by an upper limit value minus a safety distance and a lower limit value plus a safety distance.

**3.** Method according to either of Claims 1 and 2, **characterized in that** a contactless measurement of the measurement objects is carried out, in particular with the aid of an X-ray fluorescence radiation.

## Revendications

**1.** Procédé d'optimisation des durées de mesure d'un dispositif de mesure qui teste des pièces de série, **caractérisé en ce que**

on réalise une mesure pour saisir une valeur de mesure sur un objet mesuré pendant une durée de mesure (t') raccourcie inférieure à une durée de mesure (t) définie par les spécifications de capacité de l'appareil de mesure,

**en ce que** la valeur de mesure saisie sur l'objet mesuré est comparée à une valeur limite supérieure d'alarme et une valeur limite inférieure d'alarme,

**en ce que** l'on conserve en mémoire une valeur de mesure située entre la valeur limite supérieure d'alarme et la valeur limite inférieure d'alarme et on réalise ensuite la saisie d'une valeur de mesure pendant une durée de mesure (t') raccourcie, ou

**en ce que** lorsque la valeur de mesure est située à l'extérieur de l'intervalle entre la valeur limite supérieure d'alarme et la valeur limite inférieure d'alarme, on saisit de nouveau une mesure au même emplacement de mesure pendant une durée de mesure (t) et

**en ce qu'**on réalise ensuite la saisie d'une valeur de mesure pendant une durée de mesure (t') raccourcie.

**2.** Procédé selon la revendication 1, **caractérisé en ce que** les valeurs limites d'alarme sont prévues entre la valeur limite supérieure d'alarme et la valeur limite inférieure d'alarme admissibles et est définie par une valeur limite supérieure d'alarme moins un écart de sécurité et une valeur limite inférieure d'alarme plus un écart de sécurité.

**3.** Procédé selon l'une des revendications 1 ou 2, **caractérisé en ce que** l'on réalise une mesure sans contact des objets à mesurer, en particulier par fluorescence sous rayons X.

**EP 1 883 872 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020173935 A